# EUROPEAN PATENT SPECIFICATION

(11) **EP 1 579 326 B1**
(45) Date of publication and mention of the grant of the patent: **26.12.2007**
(21) Application number: 03778642.3
(22) Date of filing: 10.12.2003
(51) Int. Cl.: G06F 11/14, G11B 7/00, G11B 19/20, G06F 1/30

(54) **MODULE FOR READING A DATA CARRIER**
MODUL ZUM LESEN EINES DATENTRÄGERS
MODULE POUR LIRE UN SUPPORT DE DONNEES

(30) Priority: 20.12.2002 EP 02102844
(43) Date of publication of application: 28.09.2005
(73) Proprietor: Philips Intellectual Property & Standards GmbH, 20099 Hamburg (DE); Koninklijke Philips Electronics N.V., 5621 BA Eindhoven (NL)
(72) Inventor: Lotz, Andreas, 52066 Aachen (DE); Koch, Michael, 52066 Aachen (DE)
(74) Representative: Appelt, Christian W.
(86) International application number: PCT/IB2003/006053
(87) International publication number: WO 2004/057475

(56) References cited:
- EP-A- 0 565 091
- EP-A- 0 679 983
- US-A- 5 365 502
- US-A- 5 761 519
- US-B1- 6 396 777

## Description

The invention relates to a module for reading a data carrier, comprising a processor arrangement and a memory arrangement.

Modules are known which are designed for reading data carriers, in particular CDs, SACDs, minidisks, or DVD-audio/video used in the automotive field for incorporation in a car radio. Such modules offer the advantage that the module can always be of the same construction independently of the requirements or wishes of the end users or the car radio manufacturers, for example relating to different fronts or controls. The car radio itself comprises inter alia the front panel comprising controls and usually a display, the amplifier electronics, and a tuner unit for radio reception. Modules to be integrated in car radios must comply with stringent requirements such as a small constructional volume in spite of complicated mechanical elements, operation under major shocks and impacts and at high temperatures, and a defined heat balance. It is in particular the small constructional volume and the heat balance that usually do not allow complicated electronic components to be used in a module. Furthermore, the possibility of information transfer to the user is limited because of a display that is limited in its display possibilities.

A Resume function is known in portable CD players which, after stopping and switching-off and a renewed switching-on of the CD player, resumes the reproduction of the audio CD in that location where it was stopped.

A so-called "Favorite Track Selection" (FTS) function is known in CD players, according to which the user can compose a list of audio tracks that he/she always wants to hear from a given CD. When an audio CD is inserted again, and the FTS is activated, the audio tracks selected for this CD are played instead of a reproduction of the complete CD.

US patent No. US-B-6,396,777 discloses a compact disk player where a resume position and audio information are stored from a begin position to the resume position when the deactivation of the compact disc player is indicated. The resume position is a playing time information 5 seconds after the playing time at the deactivation signal. In this way the stored audio information can be reproduced while the compact disc player resumes reading operation so that a noticeable access time is avoided when resuming the play operation.

US patent No. US-A-5,365,502 discloses an optical disc player that has a first memory for storing therein playback position information of the optical disc at timing point in which the reproducing operation of a reproducing unit is operated, where the reproducing operation is resumed on the playback position information. The playback position information is a track number, absolute time or the like.

US patent No. US-A-5,761,519 discloses a computer with a removable medium drive, where for performing a resume function, head position information and recording data amount information are stored.

European patent application No. EP-A-0679 983 A2 discloses an expansion device, e.g. a CD-ROM device, detachably installed into a computer system having non-volatile data storage means for saving context information in order to permit a task to be restarted from the same point after power-down. The context information including TOC information in case the expansion device is a CD-ROM device,

European patent application No. EP-A-0 565 091 A2 discloses a CD-ROM disc reproducing apparatus that has memory means into which progression data (a stack pointer and a program pointer) of a program that plays and controls a CD-ROM disc is sequentially stored. In case playback control is resumed after it had been stopped, the playback control state can be recovered to the state represented at a timing point that the playback control state of the CD-ROM disc is interrupted.

It is an object of the invention to improve the module described above. This object is achieved by means of a module according to claim 1.

The module according to the invention as defined in claim 1 offers the advantage that the renewed start action of a data carrier becomes faster, because information on the data carrier has been stored and can be functionally applied with reference to the identification information.

The expression "processor arrangement" denotes the electronic components which are used for decoding, decompressing, and generally processing the data sequences that are read from a data carrier, and also for processing the received commands and for sending messages. A processor arangement may comprise a plurality of components, for example a specific decoding processor and/or a programmable digital signal processor (DSP), as well as other associated electronic components. The term "memory arrangement" is understood to be at least a memory component or a plurality of memory components which are each disigned for the complete or partial, volatile or non-volatile storage of program data for a DSP and/or for storing intermediate data (for example information on the data sequences of the data carrier instantaneously present in the module), and/or other data.

It is an advantage of the invention that a Resume function (playback starting from that location where the playback was previously interrupted) is offered which is also safeguarded when the data carrier is removed. The stored identification information ensures that the removed data carrier, upon its renewed insertion, can be recognized on the basis of this identification information, and the stored playing time information can be used for starting the reading of the data carrier in the location on the data carrier corresponding to the playing time information.

A further advantage is a substantially faster access time to a data carrier (for example a CD-ROM), if the necessary content information (for example the necessary information from the Volume Descriptor of a CD-ROM) has already been stored, and the access results from the previously stored content information.

It is particularly advantageous if the content information is stored in a directory structure that has not more than one hierarchical level. The ease of handling of the content information is retained thereby, and a smaller memory can be used (i.e, a cheaper memory that consumes only little power).

One embodiment of the invention offers the advantage that data sequences already read or scanned, for example in a random shuffle or an intromode, need not be read or scanned again upon a renewed insertion of the data carrier or a renewed switching-on of the module.

A further advantage of the invention is the accurate Resume function for compressed data sequences rendered possible by the storage of the real time information (i.e. the real playing time of a compressed data sequence).

The invention also relates to a data carrier playback device, e.g. a car radio, in which a module according to the invention is incorporated.

The various aspects of the invention will be explained in detail below with reference to embodiments and the drawing, in which:
Fig. 1 shows a module for reading data carriers with a CD/DVD in the insertion/ejection compartment,
Fig. 2 shows a car radio which is designed for incorporation in the interior of an automobile and in which a module for reading data carriers is mounted,
Fig. 3 is a block diagram of the internal construction of the module,
Fig. 4 shows by way of example the internal directory structure of a ROM data sequence structure in which audio data sequences with compressed contents and data sequences without audio contents are laid down in the various sub-directories, and
Fig. 5 diagrammatically shows how the information on the audio data sequences with non-compressed contents, entered in the root directory of the CD, and the information on the audio data sequences with compressed contents, entered in the ROM data sequence structure, are stored in the directories of the memory arrangement,

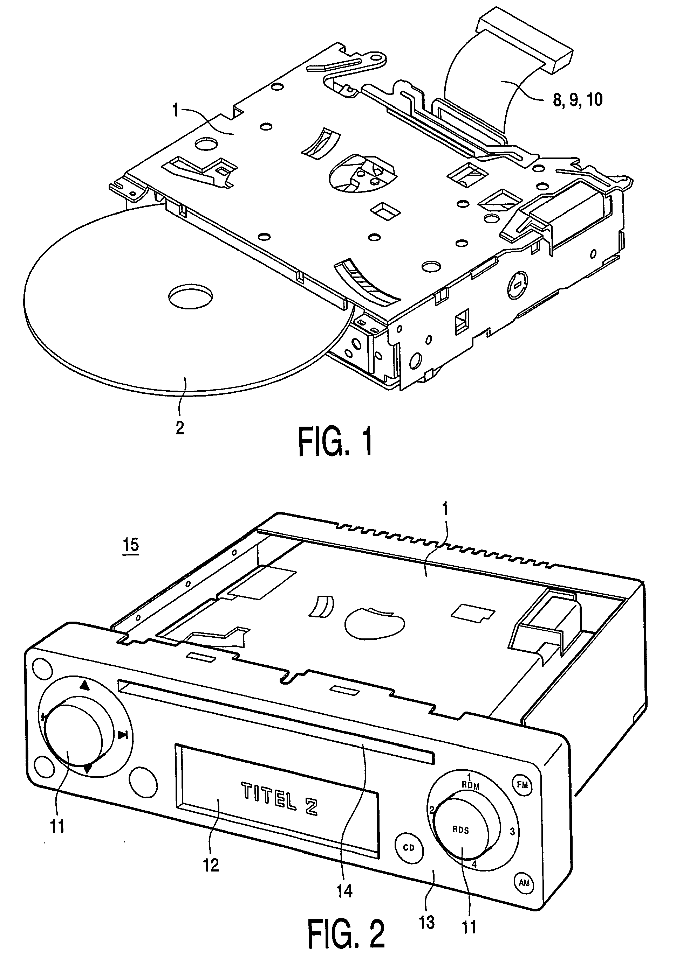

Fig. 1 shows a module 1 for reading data carriers 2, which module has a data carrier 2 in its insertion/ejection compartment. Lines 8, 9, 10 (here shown as a flat cable with a plug connector) are provided for the power supply and data exchange and are coupled to the car radio. The disc-shaped data carrier 2 (a CD/DVD in this case) is transported to a drive unit by mechanical elements (not shown) and is rotated thereon, such that a radially movable data pick-up is capable of reading data sequences present in spiraling structures on the CD/DVD.

Fig. 2 shows a car radio 15 which is designed for incorporation in the instrument panel of an automobile. The car radio 15 has a front 13 with controls 11, a display 12, and a slot 14 corresponding to the insertion/ejection compartment of the module. The module 1 is integrated in the car radio 15, which may be realized by means of screwing or locking or other known mounting methods. A user may carry out simple or complicated operational actions by means of the controls 11, which then leads to an exchange of commands from the car radio 15 to the module 1. The module 1 supplies messages on its state, on errors, and on the processing of commands in return, which messages can be shown on the display 12.

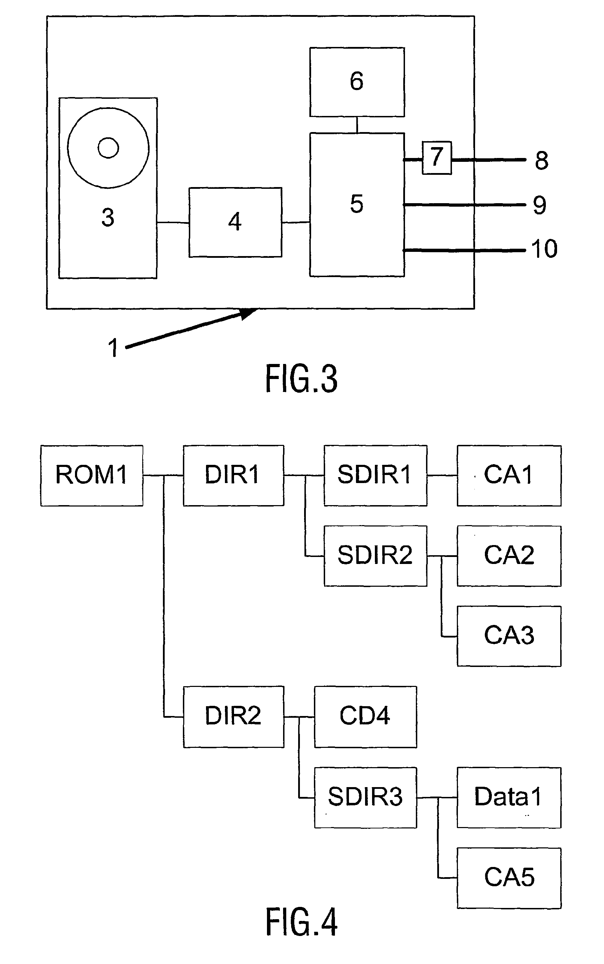

Fig. 3 is a block diagram of the internal construction of a module 1 for reading CDs or DVDs. The drive unit 3 proper is formed by the drive for rotating the CD/DVD, the optical data pick-up unit with a laser diode, lenses, and lens actuators for adjusting the focusing and tracking, a photodiode array for the multiple-field measurement for determining the focusing and tracking quality, and a radial drive for the data pick-up unit. The decoder IC 4 decodes the read data (for example EFM demodulation and error correction) and carries out an error interpolation, if necessary, and also controls the lens actuators for safeguarding an optimum focusing and tracking on the basis of the values of the multiple-field measurement. In the embodiment shown, the processor arrangement comprises the decoder IC 4 (for example a Philips PhonIC), a DSP 5 (for example a DA 150 from TI) for digital data processing, and a digital/analog converter unit 7. The DSP 5 carries out, for example, the MP3 decoding. The necessary program for MP3 decoding is stored in a non-volatile manner in the memory arrangement 6 and is loaded into the DSP 5 upon switching-on of the module. Other programs may equally be stored and loaded. Furthermore, new or updated programs may be read from a CD-ROM and may be stored in the memory arrangement 6. The data sequences under discussion here are also deemed to comprise such program data. The memory arrangement 6 may comprise volatile memories here (for example RAMs) and non-volatile memories (for example Flash memories).

The power supply and the communication with and control by the car radio are served by several lines 8, 9, 10, for example a I²S bus (Inter-IC-Sound), a I²C bus (Inter-IC-Communication), an S/P-DIF (Sony/Philips Digital Interface) output, analog outputs (for the respective left and right audio channels) for the transmission of digital/analog-converted audio data, and a power supply line. The I²S and I²C buses are serial buses with one or several clock lines for ensuring synchronization. As is shown in Fig. 1, the totality of all lines may be realized as a flat cable with a plug connector.

On an audio CD, audio data are laid down consecutively on a spiraling track from the inside to the outside (this relates either to the process of manufacturing an audio CD, for example with molded pits, or a corresponding writing process on a CD-R or CD-RW for the manufacture of an audio CD). A table of contents (TOC), in which information is laid down on the CD and on the individual audio data sequences, is present before the start of the actual audio data on the CD. In this TOC, for example, the absolute moment of the start of each audio data sequence can be found. This start time information is given in minutes (min), seconds (s), and frames (fra), one frame being one seventy-fifth of a second. A frame on a standard audio CD is composed of 98 fundamental 588-bit frames. Consecutive audio data are first interleaved and subsequently error-coded by the CIRC method. A further eight control bits are added to each block of 192 payload data bits and 64 error correction bits. Such a data block is subjected to an Eight-to-Fourteen Modulation (EFM) in which each eight-bit word is converted into a fourteen-bit word. Three coupling bits are joined to each fourteen-bit word, and finally each fundamental frame is provided with 24 synchronization bits, which results in a total of 588 bits. The information (min, s, fra) is also denoted a pointer, because the start of a data sequence can be unequivocally defined thereby (the time information in min, s, fra is incorporated in 98 control bits in each frame). Furthermore, the running time information for each audio data sequence can be calculated from the information in the TOC.

Compressed audio data and playlists are laid down on a CD in the CD-ROM standard (Yellow Book Standard). Since it should be possible to reconstruct ROM data fully also in the case of minor scratches on the CD, there is an additional coding in addition to the channel coding described above. Instead of 192 payload data bits, blocks (sectors) of 2048 payload data bits are defined, which lead to a total of 2352 bytes per sector in combination with error correction data and other additional information. This corresponds to the payload data bits of 98 fundamental frames. The 2352 bytes of a sector are subdivided into 98 fundamental frames, as are the audio data, and are subjected to the same error coding and EFM, so that CD-ROM data can work with a double error correction. ROM data are laid down in a ROM data sequence structure. A ROM data sequence structure has its own table of contents (the so-called Volume Descriptor) and at least one data sequence. A ROM data sequence is characterized as such in the TOC of the CD. There is only one ROM data sequence structure on a standard CD-ROM. A ROM data sequence structure here usually comprises several data sequences arranged in a hierarchical structure, but these are not indicated in the TOC of the CD.

Each ROM data sequence structure has a table of contents (Volume Descriptor) in accordance with the ISO 9660 standard and possibly supplemented with the JOLIET specification for long data sequence names. The Volume Descriptor contains information on the physical locations where the data sequences contained in the ROM data sequence structure have their respective starting points. The start time of such a data sequence is also given in minutes, seconds, and frames, i.e. also by means of a pointer. Furthermore, the Volume Descriptor gives the name and the path of each of the data sequences, possibly hierarchically organized, within the ROM data sequence structure. Each data sequence of the ROM data sequence structure is characterized by an extension which describes the nature of the data sequence. Audio data sequences of audio data compressed in accordance with the MP3 process are then characterized by the extension "mp3". The Volume Descriptor, if not already present in the memory of the module, is read after insertion of the CD and is stored either in the RAM or in the Flash memory as content information. The content information is usually not an exact copy of the Volume Descriptor, but it contains only that information which is necessary for the access to the data sequences (for example the start time information) and that information that is to be made available to the user (for example the name of the data sequence).

The embodiment of a module according to the invention as described here is capable of processing various commands. Each command is characterized by a code (for example a hexadecimal code) and can accordingly be unequivocally recognized and processed accordingly. Commands such as "EJECT", "PLAY" "STOP", and "PAUSE" are known to those skilled in the art. The command "GET ready for POWER DOWN" tells the module to switch itself off. Before the actual switch-off (the "POWER DOWN"), the module is still capable of carrying out steps preparing for a correct switch-off, such as memory processes.

At least an identification information and at least a start information have been stored before the switch-off for the purpose of quickly starting an inserted data carrier upon a restart. Start information may be playing time information, the content information of the data carrier, or status information.

In the embodiment described, the identification information is derived from the TOC. For example, the identification information may consist of the sequence of start times of the individual data sequences or data sequence structures of a CD (the information of the TOC consists of the values: minutes, seconds, and frames each time). This sequence of values may be complemented with the lead-out time information (end of the data laid down on the data carrier in (min, s, fra)). The latter is advantageous if the CD/DVD comprises only a single data sequence or data sequence structure. Since the time information is accurate to one seventy-fifth of a second, the identification information thus obtained is practically speaking unique. Instead of making a simple linear sequence of the TOC time information, an algorithm may alternatively be used, which calculates an identification information from the TOC time information. This identification information may then, for example, always have the same length. An identification information may also comprise alternative data, for example the first one hundred bits of the first data sequence on the data carrier. The calculation of the identification information from the TOC has the advantage that no further reading actions are to be carried out.

If the module receives, for example, the command "GET ready for POWER DOWN" or "EJECT", the following steps are performed inter alia:
1. Content information present in the RAM is written into a non-volatile memory region (Flash memory).
2. The current playing time information (that can be determined from the current frame) is written into the non-volatile memory region.
3. The current status information (for example the list of the data sequences already read in a random or shuffle mode, the selected playlist, etc.) is written into the non-volatile memory region.
4. The identification information is written into the non-volatile memory region.
5. The "POWER DOWN" or "EJECT" action is carried out (this comprises the implementation of the "STOP" command).

It is true for steps 1, 3, and 4 that these memory steps are carried out only if the embodiment of the module provides that the relevant information is not written into the non-volatile memory region immediately, but is merely kept in the RAM.

If the module is constructed for the purpose, the CD/DVD may also be removed after the switch-off of the module. In that case the "EJECT" command activates the mechanical elements which bring the CD/DVD into the ejection position.

When the module, after being switched off, is switched on again with the CD/DVD inside, or the same CD/DVD is inserted again after ejection of the CD/DVD (in which case the module may have been switched off in the mean time), first the TOC of the CD/DVD is read, and the identification information of the CD/DVD present in the module is derived from the data of the TOC, as described above. If the newly determined identification information corresponds to a stored identification information, the stored start information for this CD/DVD (for example content information, playing time information, status information) is utilized. A considerably faster start time results from this for CD-ROMs and DVD-ROMs, because it is not necessary to read the Volume Descriptor. The possibility of "Resume Play" is offered for all data carriers, i.e. a continuation of reading of the inserted and recognized data carrier in that location where the reading was previously stopped on account of an "EJECT" or a "GET ready for POWER DOWN" command. The "Resume Play" function of the module may here be switched on and switched off by a command "Activate RESUME" and "Deactivate RESUME", respectively. The stored status information furthermore provides the possibility of realizing not only a "Resume Play" function, but also of starting the reading of the data carrier in the same modeas before . For example, if the shuffle function had been switched on and information on the already played data sequences is contained in the status information, it is possible not only to resume the reading in the same location, but also only those data sequences will be read which had not been read before. The same is true if a playlist had been selected. The reading of the data sequence is then continued within the order of data sequences given by the playlist. After the current data sequence has been read, it is not the next data sequence on the CD/DVD which is read, but the next data sequence indicated in the playlist. A playlist (or selection list) is a data sequence in a ROM data sequence structure in which a partial set of data sequences is listed and numbered, which data sequences are to be read in the order of the numbering.

The playing time information in minutes, seconds, and frames is not always sufficient for data sequences having a compressed audio content. If this relates, for example, to a data sequence with compressed speech content (for example a telephone conference recording), the compression may be very strong in part and may be as much as one hundredth. A frame then already comprises more than one second of the telephone conference recording. The storage of a real time is more useful here. The real time here is the playback time during normal reproduction of the compressed content from the start of the data sequence. The real time may be derived from the compression level, which can be determined from the compressed data. In the case of a compression to, for example, 10,000 bits/s, the real time information will be incremented by one hundredth of a second every one hundred bits. The storage of the real-time information subsequently renders it possible to carry out the "Resume Play" function much more accurately for data sequences with compressed contents than if exclusively the playing time information in minutes, seconds, and frames were stored. Furthermore, the calculation of a real-time information for compressed data sequences renders it possible to indicate this time in search commands (for example "Fast Forward" or "Fast Backward", which provide a fast playing action forward or backward, respectively). A genuine search function is thus made available to the user.

Fig. 4 shows an example of the structure of a ROM data sequence structure ROM1, as it has been laid down on the data carrier. The information on the structure and the data sequences is found in the Volume Descriptor of the data sequence structure. ROM1 comprises two directories DIR1 and DIR2. Two sub-directories SDIR1 and SDIR2 are present in DIR1, while a data sequence CA1 with compressed audio content is stored in SDIR1, and two data sequences CA2 and CA3 with compressed audio contents are stored in SDIR2. A data sequence CA4 and a sub-directory SDIR3 are present in the directory DIR2, data sequences Data1 and CA5 being stored in SDIR3, wherein Data1 is a ROM data sequence without audio content. In the case of so-called mixed-mode CDs, further non-compressed audio data sequences (for example DA1, DA2, DA3, ..., DA6) may be stored in addition to the ROM data sequence structure, this in contrast to a standard CD-ROM.

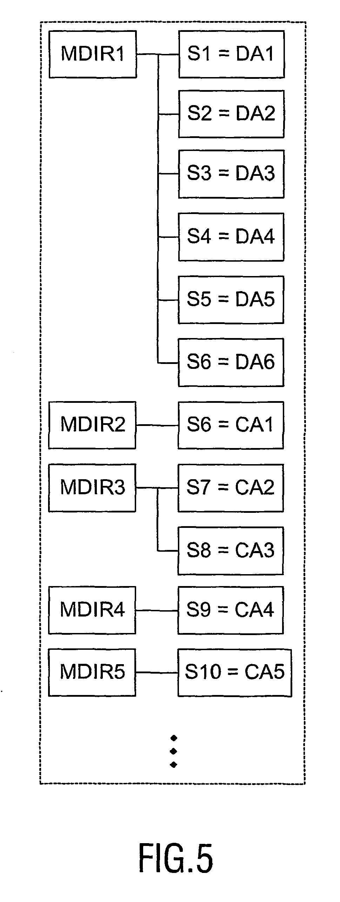

Fig. 5 shows how the information on the data sequences is arranged in directories in the memory 6. This is shown here for the non-compressed audio data sequences and the data sequences with compressed audio contents of the data sequence structure

### ROM1.

The first directory MDIR1 contains the information on the non-compressed audio data sequences DA1-DA6 which are present on the CD. It is achieved thereby that the information on the first partial set of data sequences stored on the CD itself (i.e. in the root directory of the CD) is to be found in one directory. This provides an easier overview. A second directory MDIR2 only contains the information S6 on the data sequence CA1. CA1 is the first data sequence that was found in a directory in the data sequence structure ROM1. No further data sequences were present in this directory, which means that no further information on other data sequences is present either in MDIR2. It is achieved thereby that information on data sequences that are present in a directory on the CD can also be found in a directory in the memory 6 of the module. The directory SDIR1, in which CA1 is stored, itself is a sub-directory of DIR1, which is a directory of the ROM1. Nevertheless, S6 is stored in a directory MDIR2 which is parallel to MDIR1. It is achieved thereby that also complicated directory structures are disentangled in the memory of the module, and the information on the data sequences is presented at a single hierarchical level. This simplifies the ease of handling and saves memory space. A memory represents a considerable cost factor for a module.

## Claims

1. A module (1) for reading a data carrier (2) that comprises data sequences (CA1, CA2,...) with compressed contents, with a processor arrangement (4, 5, 7) and a memory arrangement (6),
- wherein the module (1) is designed for incorporation in a data processing device (15),
- wherein the processor arrangement (4, 5, 7) is designed for calculating a real-time playback time information during reproduction of the compressed contents, and
- the processor arrangement (4, 5, 7) is further designed for storing an identification information associated with the data carrier and at least a start information that comprises the real-time playback time information in the memory arrangement (6) when the reading of the data sequences with compressed content of data carrier is interrupted.

2. A module as claimed in claim 1, **characterized in that** the real-time playback time information is the playback time during normal reproduction of the compressed content from the start of the data sequence.

3. A module as claimed in claim 1, **characterized in that** the start information comprises content information of the data carrier (2).

4. A module as claimed in claim 3, **characterized in that** the processor arrangement (4, 5, 7) is designed for storing the content information in a directory structure with not more than one hierarchical level.

5. A module as claimed in claim 1, **characterized in that** the start information comprises information on the data sequences that have already been at least partly read.

6. A module as claimed in claim 1, **characterized in that** the memory arrangement (6) comprises a non-volatile memory region.

7. A module as claimed in claim 1, **characterized in that** the data processing device is a car radio.

8. A data carrier playback device, in which a module according to one of the claims 1-7 is incorporated.

9. A module according to claim 1, wherein the processor arrangement (4, 5, 7) is designed to compute the real-time playback time information during execution of a search command, particularly a "Fast Forward" or "Fast Backward" command.

## Patentansprüche

1. Modul (1) zum Lesen eines Datenträgers (2), der Datenfolgen (CA1, CA2, ...) mit komprimiertem Inhalt umfasst, mit einer Prozessoranordnung (4, 5, 7) und einer Speicheranordnung (6),
- wobei das Modul (1) zum Einbau in eine Datenverarbeitungseinrichtung (15) vorgesehen ist,
- wobei die Prozessoranordnung (4, 5, 7) dazu vorgesehen ist, während der Wiedergabe des komprimierten Inhalts eine Echtzeit-Abspielzeitinformation zu berechnen, und
- die Prozessoranordnung (4, 5, 7) weiterhin dazu vorgesehen ist, eine zu dem Datenträger gehörende Identifizierungsinformation und mindestens eine die Echtzeit-Abspielzeitinformation umfassende Startinformation in der Speicheranordnung (6) zu speichern, wenn das Lesen der Datenfolgen mit komprimiertem Inhalt des Datenträgers unterbrochen wird.

2. Modul nach Anspruch 1, **dadurch gekennzeichnet, dass** die Echtzeit-Abspielzeitinformation die Abspielzeit während der normalen Wiedergabe des komprimierten Inhalts von Beginn der Datenfolge an ist.

3. Modul nach Anspruch 1, **dadurch gekennzeichnet, dass** die Startinformation Inhaltsinformationen des Datenträgers (2) umfasst.

4. Modul nach Anspruch 3, **dadurch gekennzeichnet, dass** die Prozessoranordnung (4, 5, 7) dazu vorgesehen ist, die Inhaltsinformationen in einer Verzeichnisstruktur mit nicht mehr als einer hierarchischen Ebene zu speichern.

5. Modul nach Anspruch 1, **dadurch gekennzeichnet, dass** die Startinformation Informationen zu den bereits mindestens teilweise gelesenen Datenfolgen umfasst.

6. Modul nach Anspruch 1, **dadurch gekennzeichnet, dass** die Speicheranordnung (6) einen nicht flüchtigen Speicherbereich umfasst.

7. Modul nach Anspruch 1, **dadurch gekennzeichnet, dass** die Datenverarbeitungseinrichtung ein Autoradio ist.

8. Datenträger-Abspieleinrichtung, in die ein Modul nach einem der Ansprüche 1-7 eingebaut ist.

9. Modul nach Anspruch 1, bei dem die Prozessoranordnung (4, 5, 7) dazu vorgesehen ist, während der Ausführung eines Suchbefehls, insbesondere eines Befehls "schneller Vorlauf' oder "schneller Rücklauf", die Echtzeit-Abspielzeitinformation zu berechnen.

## Revendications

1. Module (1) pour lire un support de données (2), qui comprend des suites de données (CA1, CA2,...) avec des contenus compressés, avec un agencement de processeur (4, 5, 7) et un agencement de mémoire (6),
- dans lequel le module (1) est conçu pour être incorporé dans un dispositif de traitement de données (15),
- dans lequel l'agencement de processeur (4, 5, 7) est conçu pour calculer des informations de durée de reproduction en temps réel durant la reproduction des contenus compressés, et
- l'agencement de processeur (4, 5, 7) est en plus conçu pour stocker des informations d'identification associées au support de données et au moins des informations de démarrage qui comprennent les informations de durée de reproduction en temps réel dans l'agencement de mémoire (6) lors de l'interruption de la lecture des suites de données avec des contenus compressés du support de données.

2. Module selon la revendication 1, **caractérisé en ce que** les informations de durée de reproduction en temps réel sont la durée de reproduction durant la reproduction normale du contenu compressé à partir du début de la suite de données.

3. Module selon la revendication 1, **caractérisé en ce que** les informations de démarrage comprennent les informations de contenu du support de données (2).

4. Module selon la revendication 3, **caractérisé en ce que** l'agencement de processeur (4, 5, 7) est conçu pour stocker les informations de contenu dans une structure de répertoire n'ayant pas plus d'un niveau hiérarchique.

5. Module selon la revendication 1, **caractérisé en ce que** les informations de démarrage comprennent des informations sur les suites de données qui ont déjà été au moins partiellement lues.

6. Module selon la revendication 1, **caractérisé en ce que** l'agencement de mémoire (6) comprend une région de mémoire non volatile.

7. Module selon la revendication 1, **caractérisé en ce que** le dispositif de traitement de données est une radio pour automobile.

8. Dispositif de reproduction support de données, dans lequel est incorporé un module selon l'une des revendications 1 à 7.

9. Module selon la revendication 1, dans lequel l'agencement de processeur (4, 5, 7) est conçu pour calculer les informations de durée de reproduction en temps réel durant l'exécution d'une commande de recherche, particulièrement une commande "Recherche Rapide Avant" ou "Recherche Rapide Arrière".
